# EUROPEAN PATENT APPLICATION

(11) **EP 4 002 648 A1**
(43) Date of publication of application: **25.05.2022**
(21) Application number: 20870980.8
(22) Date of filing: 24.09.2020
(51) Int. Cl.: H02K 1/18, F04B 39/00, F04C 23/02, H02K 1/28, H02K 5/00, H02K 5/24, H02K 15/02, H02K 15/14

(54) **ROTATING ELECTRIC MACHINE, COMPRESSOR, AND METHOD FOR MANUFACTURING ROTATING ELECTRIC MACHINE**

(30) Priority: 30.09.2019 JP 2019178733
(71) Applicant: Daikin Industries, Ltd., Osaka-shi, Osaka 530-8323 (JP)
(72) Inventor: NAKA, Shoujirou, Osaka-shi, Osaka 530-8323 (JP); HIRATSUKA, Daisuke, Osaka-shi, Osaka 530-8323 (JP)
(74) Representative: Goddar, Heinz J.
(86) International application number: PCT/JP2020/036062
(87) International publication number: WO 2021/065676

(57) **Abstract**

A plurality of iron cores (10, 20) and a plurality of supporting members (2a, 4) are provided. At least one of the iron cores (10, 20) is supported by any one of the supporting members (2a, 4) via a resin member (40). At least either of the iron core (10, 20) and the supporting member (2a, 4) that are mutually supported via the resin member (40) is provided with an elastic deformation portion (18) configured to press the resin member (40) against the other one of the iron core (10, 20) and the supporting member (2a, 4) by elastic force.

## Description

### Technical Field

The present disclosure relates to a rotating electric machine, a compressor, and a method of manufacturing a rotating electric machine.

### Background Art

In most rotating electric machines such as motors, a stator is fixed to a casing. In some of such rotating electric machines, a stator and a casing are fixed to each other by the elastic restoring force of the casing (refer to, for example, PTL 1).

### Citation List

### Patent Literature

PTL 1: Japanese unexamined Patent Application Publication No. 2005-155368

### Summary of Invention

### Technical Problem

In a rotating electric machine, an iron core of a stator or the like and a supporting member for the iron core may be intended to be electrically insulated from each other by a resin or the like.

An object of the present disclosure is to reliably fix an iron core and a supporting member for the iron core to each other in an electrically insulated state in a rotating electric machine.

### Solution to Problem

A first aspect of the present disclosure is a rotating electric machine including: a plurality of iron cores (10, 20); and a plurality of supporting members (2a, 4). At least one of the iron cores (10, 20) is supported by any one of the supporting members (2a, 4) via a resin member (40). At least either of the iron core (10, 20) and the supporting member (2a, 4) that are mutually supported via the resin member (40) is provided with an elastic deformation portion (18) configured to press the resin member (40) against the other one of the iron core (10, 20) and the supporting member (2a, 4).

In the first aspect, the resin member (40) is pressed by elastic force against a member on which the resin member (40) is mounted. According to the first aspect, it is possible to reliably fix the iron cores and the supporting members for the iron cores to each other in an electrically insulated state in the rotating electric machine.

A second aspect of the present disclosure is the rotating electric machine according to the first aspect in which a gap (S1) is formed between a body of a member provided with the elastic deformation portion (18) and the resin member (40).

A third aspect of the present disclosure is the rotating electric machine according to the first aspect or the second aspect in which a plurality of the elastic deformation portions (18) are provided at predetermined intervals, and a gap (S2) is formed between the elastic deformation portions (18) adjacent to each other.

A fourth aspect of the present disclosure is the rotating electric machine according to any one of the first to third aspects in which the iron core (10, 20) supported by the supporting member (2a, 4) via the resin member (40) is a stator (10), and the supporting member (2a, 4) that supports the stator (10) is a casing (4).

In the fourth aspect, the stator (10) and the casing (4) are fixed to each other reliably.

A fifth aspect of the present disclosure is the rotating electric machine according to any one of the first to fourth aspects in which the iron core (10, 20) supported by the supporting member (2a, 4) via the resin member (40) is a rotor (20), and the supporting member (2a, 4) that supports the rotor (20) is a shaft (2a).

In the fifth aspect, the rotor (20) and the shaft (2a) are fixed to each other reliably.

A sixth aspect of the present disclosure is a compressor including: the rotating electric machine (2) according to any one of the first to fifth aspects; and a compression mechanism (3) configured to be driven by the rotating electric machine.

In the sixth aspect, it is possible to obtain the aforementioned effects in the compressor.

A seventh aspect of the present disclosure is a method of manufacturing a rotating electric machine. The rotating electric machine includes an iron core (10, 20), a supporting member (2a, 4) that supports the iron core (10, 20) via a resin member (40), and an elastic deformation portion (18) that is provided on at least either of the iron core (10, 20) and the supporting member (2a, 4) and that is configured to press the resin member (40) against the other one of the iron core (10, 20) and the supporting member (2a, 4) by elastic force. The method includes a step of forming the resin member (40) on the elastic deformation portion (18) by injection molding; and a step of fixing the iron core (10, 20) and the supporting member (2a, 4) to each other while elastically deforming the elastic deformation portion (18).

In the seventh aspect, it is possible to fix the iron core and the supporting member to each other reliably in an electrically insulated state.

### Brief Description of Drawings

[Fig. 1] Fig. 1 is a sectional view of a compressor according to Embodiment 1.
[Fig. 2] Fig. 2 schematically illustrates a sectional shape of a motor.
[Fig. 3] Fig. 3 is a plan view of a stator plate in Embodiment 1.
[Fig. 4] Fig. 4 is a perspective view of a rotor.
[Fig. 5] Fig. 5 is a plan view of a rotor plate in Embodiment 1.
[Fig. 6] Fig. 6 is an enlarged view of a stator according to Embodiment 2.
[Fig. 7] Fig. 7 is an enlarged view of a stator according to Embodiment 3.
[Fig. 8] Fig. 8 illustrates a resin member according to Embodiment 4.
[Fig. 9] Fig. 9 illustrates an elastic deformation portion and a resin member according to Embodiment 5.
[Fig. 10] Fig. 10 illustrates an elastic deformation portion and a resin member according to Embodiment 6.
[Fig. 11] Fig. 11 illustrates an elastic deformation portion and a resin member according to Modification 1 of Embodiment 6.
[Fig. 12] Fig. 12 illustrates an elastic deformation portion and a resin member according to Modification 2 of Embodiment 6.

### Description of Embodiments

In the present disclosure, a rotating electric machine, a compressor, and a method of manufacturing a rotating electric machine will be described.

### [Embodiment 1]

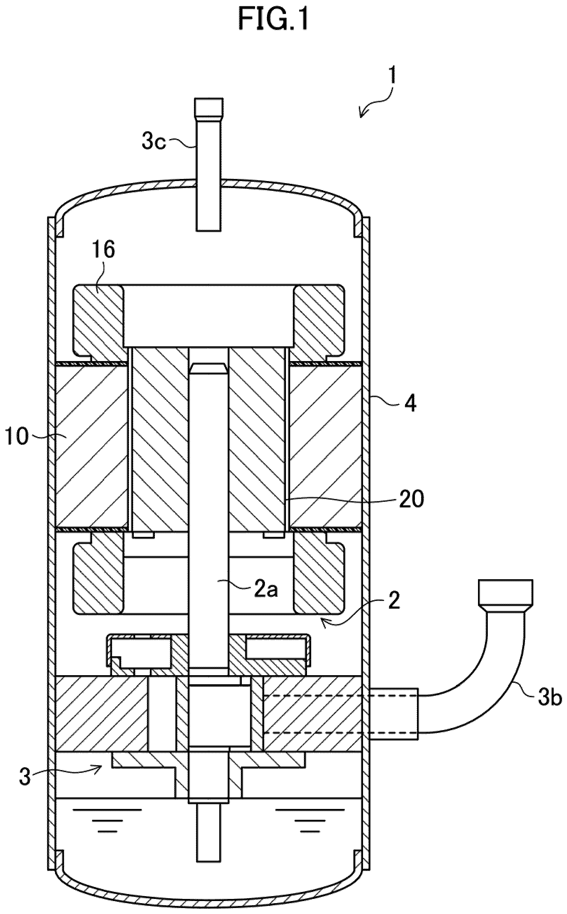

In Fig. 1, a sectional view of a compressor (1) according to the present embodiment is illustrated. The compressor (1) is provided in, for example, a refrigerant circuit (not illustrated) of an air conditioning apparatus. The compressor (1) compresses a refrigerant in the refrigerant circuit. As illustrated in Fig. 1, the compressor (1) includes a motor (2), a compression mechanism (3), and a casing (4).

The casing (4) is a container that houses the compression mechanism (3) and the motor (2). The casing (4) is a supporting member that supports a stator (10) of the motor (2).

The casing (4) is an airtight container. The casing (4) is formed of a metal, such as iron or the like. The casing (4) can be formed by, for example, subjecting a metal plate (a plate material of iron or the like) to a so-called rolling to form a cylindrical member and welding a panel (a metal of iron or the like) to both ends of the cylindrical member.

The compression mechanism (3) compresses a fluid (a refrigerant in this example). As the compression mechanism (3), various fluid machinery can be employed. For example, a rotary compression mechanism, a scroll compression mechanism, or the like can be employed as the compression mechanism (3). In this example, the compression mechanism (3) sucks a fluid from a suction pipe (3b) provided at a side surface of the casing (4) and discharges the compressed fluid into the casing (4). The fluid (refrigerant) discharged into the casing (4) is discharged via a discharge pipe (3c).

### <<Configuration of Motor (2)>>

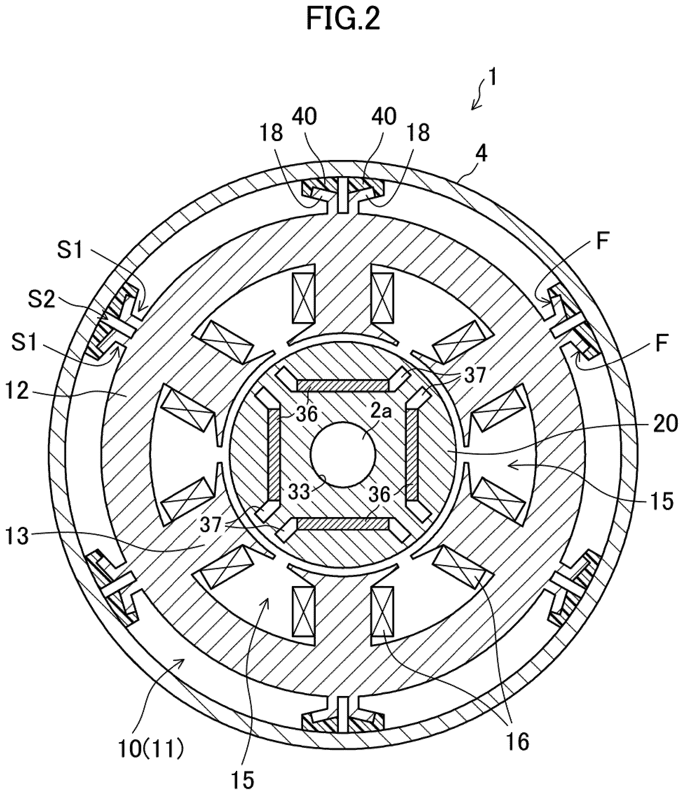

The motor (2) is an example of a rotating electric machine. The motor (2) drives the compression mechanism (3). In Fig. 2, a sectional shape of the motor (2) is schematically illustrated. The motor (2) is an interior-permanent-magnet rotating electric machine. As illustrated in Fig. 2, the motor (2) includes the stator (10), a rotor (20), and a shaft (2a). The casing (4) may be also considered as part of the motor (2).

The shaft (2a) is a supporting member that supports the rotor (20). The shaft (2a) is formed of a metal such as iron or the like. The shaft (2a) is also coupled to the compression mechanism (3).

In the following description, the axial direction denotes a direction of the shaft center of the shaft (2a). The radial direction denotes a direction orthogonal to the axial direction. The outer peripheral side denotes a side far away from the shaft center. The inner peripheral side denotes a side close to the shaft center.

### <Stator (10)>

The stator (10) includes a stator iron core (11), a coil (16), and a resin member (40).

The stator iron core (11) is a cylindrical member. The stator iron core (11) is constituted by a large number of plate members (hereinafter referred to as the stator plates (17)) laminated in the axial direction. The stator iron core (11) is a so-called laminated core.

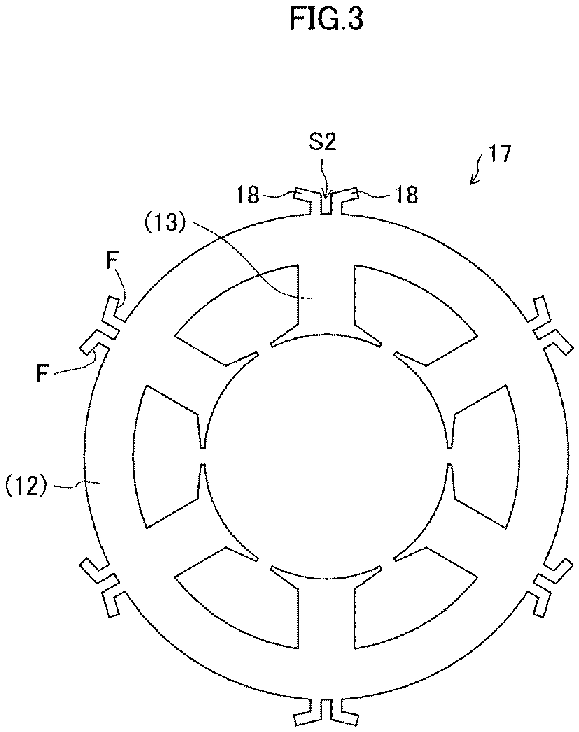

In Fig. 3, a plan view of the stator plates (17) in the present embodiment is illustrated. The stator plates (17) are constituted by, for example, electromagnetic steel sheets. The stator plates (17) can be manufactured by, for example, pressing electromagnetic steel sheets. In the manufacture of the stator iron core (11), the stator plates (17) are fixed to each other by, for example, crimping.

The stator iron core (11) includes a back yoke (12), a plurality of teeth portions (13), and a plurality of elastic deformation portions (18).

The back yoke (12) is a part of the stator iron core (11) on the outer peripheral side. The planar shape of the back yoke (12) viewed in the axial direction is an annular shape.

Each of the teeth portions (13) is a rectangular parallelepiped part extending in the radial direction in the stator iron core (11). In this example, there are six teeth portions (13). For example, the coil (16) is wound around each of the teeth portions (13) by concentrated winding. A space between the mutually adjacent teeth portions (13) is a coil slot (15) for housing the coil (16).

### - Elastic Deformation Portion (18) -

The elastic deformation portion (18) is a section that is provided to press the resin member (40) against the casing (4) by elastic force. The elastic deformation portion (18) is formed on the outer periphery of the back yoke (12) (refer to Fig. 2 and Fig. 3).

In this example, twelve elastic deformation portions (18) are provided. These elastic deformation portions (18) are disposed at predetermined intervals. The shape and the dimensions of each of these elastic deformation portions (18) are set to be elastically deformable in the radial direction of the stator iron core (11). The elastic deformation portions (18) elastically deformed toward the inner peripheral side attempt to return to the outer peripheral side. In other words, when the elastic deformation portions (18) are preloaded toward the inner peripheral side, the elastic deformation portions (18) exert elastic force toward the outer peripheral side.

In this example, the elastic deformation portions (18) are formed with respect to all of the stator plates (17). The planar shape of each of the elastic deformation portions (18) viewed in the axial direction is an L-shape (refer to Fig. 2 and Fig. 3). In the present description, the L-shape denotes a shape formed by two regions that join to form a planar curved portion (a corner portion in Fig. 2, etc.).

In this example, two elastic deformation portions (18) are adjacent to each other and form a pair. The curving directions (in other words, the orientations of the L-shapes) of the curved portions of a pair of two elastic deformation portions (18) are opposite each other (refer to Fig. 2 and Fig. 3). In this example, sets of the elastic deformation portions (18) that form a pair are arranged such that the circumferential-direction positions thereof correspond to the circumferential-direction positions of the teeth portions (13).

### - Resin Member (40) -

The resin member (40) is a member for electrically insulating the casing (4) and the stator (10) from each other. During operation of the compressor (1), leakage current attempts to flow out to the outside of the casing (4) from the stator (10) via the casing (4). In this example, the resin member (40) suppresses leakage current.

The resin member (40) is formed of, for example, a resin material of PPS, PBT, LCP, or the like. PPS is an abbreviation of poly phenylene sulfide resin. PBT is an abbreviation of poly butylene terephthalate. LCP is an abbreviation of liquid crystal polymer.

The resin member (40) is provided between the elastic deformation portions (18) and the casing (4). In this example, the resin member (40) is fixed to the elastic deformation portions (18).

A gap (S1) is formed between a body of the member provided with the elastic deformation portions (18) and the resin member (40) (refer to Fig. 2). The "body of the member provided with the elastic deformation portions (18)" is a part of the stator iron core (11) excluding the elastic deformation portions (18).

Hereinafter, a "surface of the elastic deformation portion (18) facing the body of the stator iron core (11)" is referred to as the "body facing surface (F)" for convenience of description. In the example in Fig. 2, the resin member (40) is not present between the body facing surface (F) and the back yoke (12) (body). In the example in Fig. 2, a space between the body facing surface (F) and the back yoke (12) is the gap (S1).

A gap (S2) is formed between the elastic deformation portions (18) that form a pair (refer to Fig. 2 and Fig. 3). In this example, the resin member (40) fixed to one of mutually adjacent elastic deformation portions (18) and the resin member (40) fixed to the other one of the mutually adjacent elastic deformation portions (18) are not in contact with each other in a state of the single stator (10) .

### <Rotor (20)>

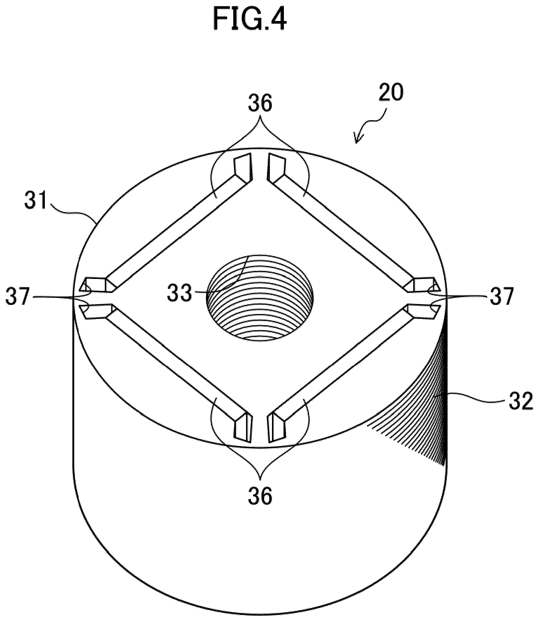

In Fig. 4, a perspective view of the rotor (20) is illustrated. The rotor (20) includes a rotor iron core (31) and a permanent magnet (36). The permanent magnet (36) is housed in a through hole (magnet slot (37)) formed in the rotor iron core (31). In this example, the rotor (20) includes four permanent magnets (36).

The rotor iron core (31) is constituted by a large number of plate members (hereinafter referred to as rotor plates (32)) that are laminated in the axial direction. The rotor iron core (31) is a so-called a laminated core.

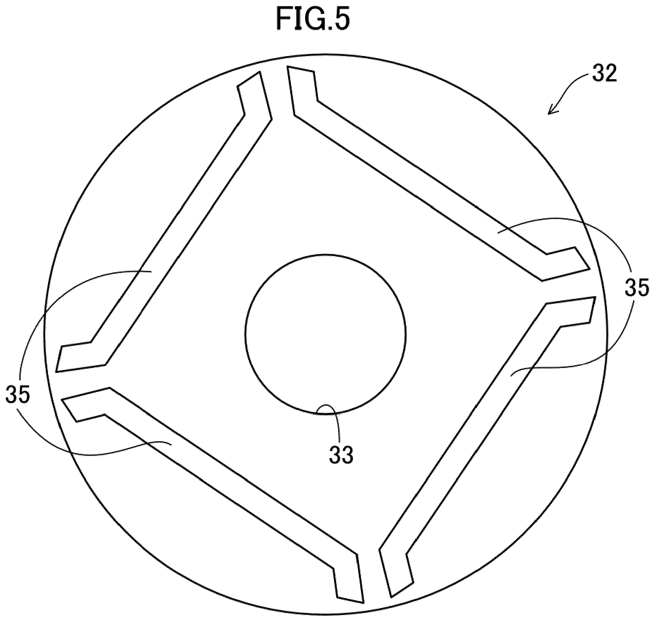

In Fig. 5, a plan view of the rotor plate (32) in the present embodiment is illustrated. In this example, the rotor plate (32) is constituted by an electromagnetic steel sheet. The rotor plate (32) can be manufactured by, for example, pressing an electromagnetic steel sheet. In the manufacture of the stator iron core (11), the rotor plates (32) are fixed to each other by, for example, crimping.

As illustrated in Fig. 5, a through hole (35) is formed in the rotor plate (32) to form the magnet slot (37). A through hole (33) into which the shaft (2a) is inserted is also formed at the center of the rotor plate (32).

### <<Example of Manufacturing Steps>>

For the manufacture of the stator (10), the stator iron core (11) is prepared. The stator iron core (11) is formed by laminating the stator plates (17).

After the stator iron core (11) is prepared, a resin material is injection molded on the elastic deformation portion (18). Specifically, the stator iron core (11) is set in a metal mold (not illustrated) for resin molding, and the resin material is injected inside the metal mold.

As a result, the resin member (40) is molded integrally with the elastic deformation portion (18). The outer diameter of the stator (10) including the resin member (40) is formed to be larger than the inner diameter of the casing (4) at a stage immediately after the injection molding.

After the stator (10) is completed, the stator (10) is fixed inside the casing (4). In this example, the stator (10) is fixed inside the casing (4) by so-called shrink fitting. Specifically, the inner diameter of the casing (4) is increased by heating the casing (4) to a predetermined temperature. The stator (10) is fitted into the casing (4) having the increased inner diameter.

When the temperature of the casing (4) decreases, the inner diameter of the casing (4) decreases. When the inner diameter of the casing (4) decreases, the elastic deformation portion (18) deforms toward the inner peripheral side. In other words, the elastic deformation portion (18) is preloaded toward the inner peripheral side.

In short, the present disclosure is a rotating electric machine including a plurality of iron cores (10, 20) and a plurality of supporting members (2a, 4). At least one of the iron cores (10, 20) is supported by any one of the supporting members (2a, 4) via a resin member (40). At least either of the iron core (10, 20) and the supporting member (2a, 4) that are mutually supported via the resin member (40) is provided with an elastic deformation portion (18) that presses the resin member (40) against the other one of the iron core (10, 20) and the supporting member (2a, 4) by elastic force.

The present disclosure is a method of manufacturing a rotating electric machine, the rotating electric machine including an iron core (10, 20); a supporting member (2a, 4) that supports the iron core (10, 20) via a resin member (40); and an elastic deformation portion (18) that is provided on at least either of the iron core (10, 20) and the supporting member (2a, 4) and that presses the resin member (40) against the other one of the iron core (10, 20) and the supporting member (2a, 4), the method including a step of forming the resin member (40) on the elastic deformation portion (18) by injection molding and a step of fixing the iron core (10, 20) and the supporting member (2a, 4) to each other while elastically deforming the elastic deformation portion (18).

### <<Effects in Embodiment 1>>

In the present embodiment, the elastic deformation portion (18) is preloaded toward the inner peripheral side. When the elastic deformation portion (18) is preloaded toward the inner peripheral side, the elastic deformation portion (18) exerts elastic force toward the outer periphery. Even if the resin member (40) creeps, the resin member (40) is pressed against the inner peripheral surface of the casing (4) by the elastic force.

According to the present disclosure, it is possible to reliably fix an iron core and a supporting member for the iron core to each other in an electrically insulated state in a rotating electric machine.

During operation of the compressor (1), vibration is generated by electromagnetic force generated from the stator (10). The generated vibration attempts to be transmitted from the stator (10) to the casing (4) via the elastic deformation portion (18) and the resin member (40). However, the elastic deformation portion (18) and the resin member (40) according to the present disclosure suppress transmission of the vibration.

### [Embodiment 2]

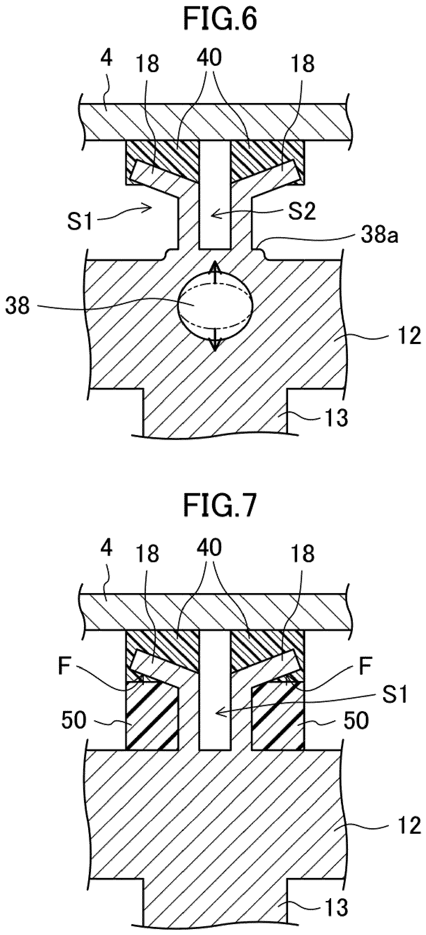

In Embodiment 2, a different example of the stator iron core (11) and a different example of the manufacturing steps will be described. Fig. 6 is an enlarged view of the stator (10) according to Embodiment 2. In Fig. 6, two elastic deformation portions (18) are illustrated.

Although not illustrated in Fig. 6, the stator iron core (11) in this example is also provided with a plurality of elastic deformation portions (18), as in the example in Embodiment 1. The shape and the dimensions of each of the elastic deformation portions (18) are set to be elastically deformable in the radial direction of the stator iron core (11) .

The planar shape of each of the elastic deformation portions (18) viewed in the axial direction is an L-shape. Two elastic deformation portions (18) are adjacent to each other and form a pair. In Fig. 6, a part around a pair of the elastic deformation portions (18) is illustrated.

In the stator iron core (11) according to the present embodiment, a through hole (38) is formed in correspondence to each of pairs of the elastic deformation portions (18). Each through hole (38) is formed in the vicinity of the base ends of the elastic deformation portions (18). The base ends of the elastic deformation portions (18) are end portions of the elastic deformation portions (18) continuous with the outer peripheral surface of the back yoke (12).

Before the stator (10) is assembled to the casing (4), the planar shape of the through hole (38) viewed in the axial direction is an ellipse (refer to the two-dot chain line in Fig. 6). The ellipse has a short axis in the radial direction of the stator iron core (11). In this example, a part between an end of the through hole (38) on the outer peripheral side and the outer peripheral surface of the back yoke (12) is a thin portion (38a). The thin portion (38a) faces the base ends of the elastic deformation portions (18) .

Also in the present embodiment, the stator iron core (11) is formed by laminating the stator plates (17). Preferably, the through hole (38) is formed in the stator plates (17) before the stator plates (17) are laminated.

After the stator iron core (11) is prepared, a resin material is injection molded on the elastic deformation portion (18). The content of the injection molding here is the same as the content of the injection molding performed in Embodiment 1. The resin member (40) is formed such that the outer diameter of the stator (10) including the resin member (40) is formed to be less than or equal to the inner diameter of the casing (4) at a stage immediately after the injection molding. As a result of this, the stator (10) can be easily inserted into the casing (4).

After the stator (10) is completed, the stator (10) is fixed inside the casing (4). Specifically, first, the stator (10) is fitted into a predetermined position inside the casing (4). After the stator (10) is fitted into the casing (4), the thin portion (38a) (plastic deformation portion) is plastically deformed toward the outer peripheral side by inserting a jig into the through hole (38).

A section of the jig orthogonal to the axial direction has, for example, a circular shape. The diameter of the circular section of the jig is larger than the short axis of the through hole (38). As described already, the thin portion (38a) is formed at the stator iron core (11).

The thin portion (38a) can be easily plastically deformed toward the outer peripheral side by inserting the jig into the through hole (38). In accordance with this plastic deformation, the elastic deformation portion (18) is preloaded toward the inner peripheral side by receiving the drag force of the resin member (40).

### <Effects in Embodiment 2>

When the elastic deformation portion (18) is preloaded toward the inner peripheral side, even if the resin member (40) creeps, the resin member (40) is pressed against the inner peripheral surface of the casing (4) by the elastic force exerted by the elastic deformation portion (18).

Also in the present embodiment, it is possible to reliably fix an iron core and a supporting member for the iron core to each other in an electrically insulated state in a rotating electric machine.

### [Embodiment 3]

Also in Embodiment 3, a different example of the manufacturing steps will be described. Fig. 7 is an enlarged view of the stator (10) according to Embodiment 3. The stator iron core (11) according to the present embodiment has the same shape as the shape of the stator iron core (11) according to Embodiment 1. The resin member (40) has a shape that differs from the shape in Embodiment 1. In the present embodiment, a resin is present also on the body facing surface (F).

Also in the present embodiment, the stator iron core (11) is formed by laminating the stator plates (17). After the stator iron core (11) is prepared, a resin material is injection molded on the elastic deformation portion (18). The content of the injection molding here is the same as the content of the injection molding in Embodiment 1 and Embodiment 2.

The outer diameter of the stator (10) including the resin member (40) is formed to be less than or equal to the inner diameter of the casing (4) at a stage immediately after the injection molding. As a result of this, the stator (10) can be easily inserted into the casing (4). Needless to say, the outer diameter of the stator (10) including the resin member (40) may be formed to be larger than the inner diameter of the casing (4).

After the stator (10) is completed, the stator (10) is fixed inside the casing (4). Specifically, first, the stator (10) is fitted into a predetermined position inside the casing (4). After the stator (10) is fitted into the casing (4), a resin is injection molded on a part corresponding to the gap (S1) in Embodiment 1. The resin that is injection molded on the part corresponding to the gap (S1) is hereinafter referred to as the fixation resin portion (50). For example, a resin material, such as PPS, PBT, or LCP, can be employed also for the fixation resin portion (50).

In a step of molding the fixation resin portion (50), the elastic deformation portion (18) is pressed toward the outer peripheral side by the pressure of the injected resin material. In other words, the fixation resin portion (50) applies holding force toward the outer peripheral side with respect to the elastic deformation portion (18). Also in the present embodiment, it is possible to reliably fix an iron core and a supporting member for the iron core to each other in an electrically insulated state in a rotating electric machine.

### [Embodiment 4]

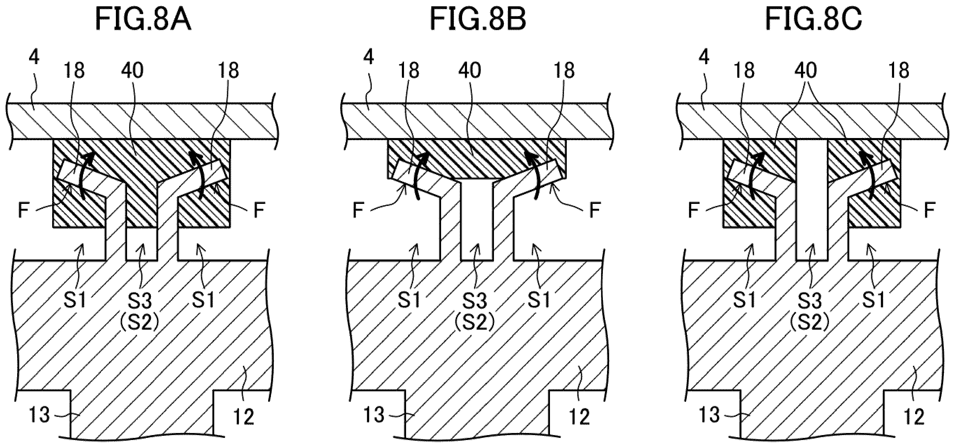

The resin member (40) may be configured as illustrated in Fig. 8A to Fig. 8C. Fig. 8A to Fig. 8C illustrate modifications of the resin member (40). In the examples in Fig. 8A to Fig. 8C, the shape of the elastic deformation portion (18) is the same as the shape in Embodiment 1 (refer to Fig. 2 and Fig. 3). Also in these examples, due to the elastic deformation portion (18) being preloaded, the elastic deformation portion (18) exerts elastic force (refer to the arrows in Fig. 8A to Fig. 8C) toward the outer periphery.

In the example in Fig. 8A, a resin that constitutes the resin member (40) is present also on the body facing surface (F). The gap (S1) is formed between the resin present on the body facing surface (F) and the body of the stator iron core (11) .

In the example in Fig. 8A, the resin member (40) is formed to extend over both of the elastic deformation portions (18) that form a pair. In the example in Fig. 8A, a region in which no resin is present (hereinafter referred to as the unfilled region (S3)) is present between the elastic deformation portions (18) that form a pair.

In the example in Fig. 8B, a resin that forms the resin member (40) is not present on the body facing surface (F). In other words, in the example in Fig. 8B, the gap (S1) is formed between the body facing surface (F) and the body of the stator iron core (11).

In the example in Fig. 8B, the resin member (40) is formed to extend over both of the elastic deformation portions (18) that form a pair. The unfilled region (S3) is present between the elastic deformation portions (18) that form a pair.

In the example in Fig. 8C, the resin that constitutes the resin member (40) is present also on the body facing surface (F). In the example in Fig. 8C, the gap (S1) is formed between the resin present on the body facing surface (F) and the body of the stator iron core (11).

In the example in Fig. 8C, the resin member (40) fixed to one of the elastic deformation portions (18) that form a pair is a separate body from the resin member (40) fixed to the other one of the elastic deformation portions (18). In the example in Fig. 8C, the unfilled region (S3) is present between the elastic deformation portions (18) that form a pair.

Although not illustrated, the body of the stator iron core (11) and the resin member (40) may be in contact with each other. In other words, the stator (10) may be not necessarily provided with the gap (S1).

### [Embodiment 5]

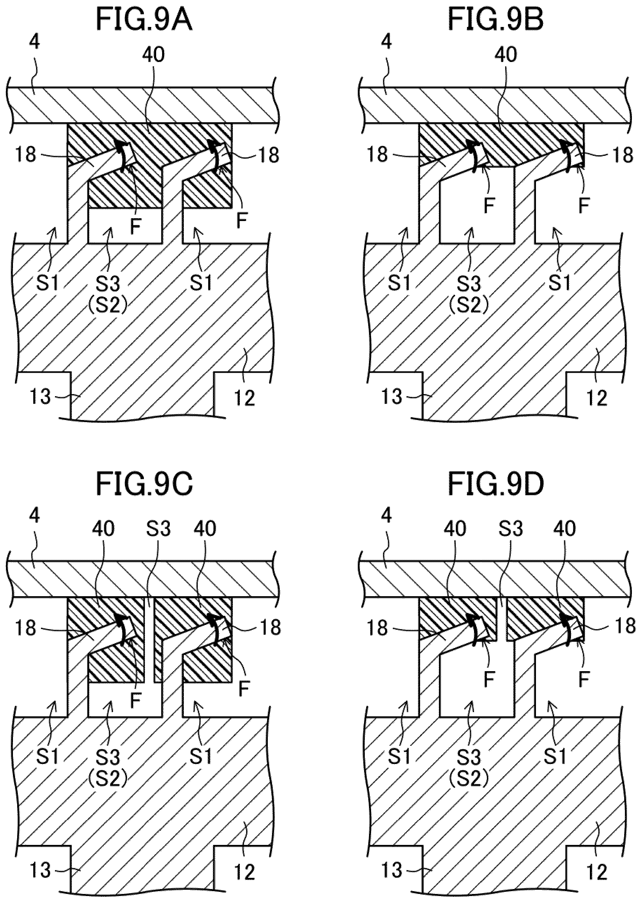

The elastic deformation portion (18) and the resin member (40) may be configured as illustrated in Fig. 9A to Fig. 9D. In Fig. 9A to Fig. 9D, two elastic deformation portions (18) that form a pair are mainly illustrated.

In each of the examples in Fig. 9A to Fig. 9D, the directions of the two elastic deformation portions (18) that form a pair differ from those in Embodiment 1. In the present embodiment, the curving direction (in other words, the orientations of the L-shapes) of the curved portions of the two elastic deformation portions (18) that form a pair are the same as each other. Also in these examples, due to the elastic deformation portion (18) being preloaded, the elastic deformation portion (18) exerts elastic force (refer to the arrows in Fig. 8A to Fig. 8C) toward the outer periphery.

In the example in Fig. 9A, the resin that constitutes the resin member (40) is present also on the body facing surface (F). In the example in Fig. 9A, the resin member (40) is formed to extend over both of the elastic deformation portions (18) that form a pair. The unfilled region (S3) is present between the elastic deformation portions (18) that form a pair.

In the example in Fig. 9B, a resin that forms the resin member (40) is not present on the body facing surface (F). In the example in Fig. 9B, the resin member (40) is formed to extend over both elastic deformation portions (18) that form a pair. In the example in Fig. 9B, the gap (S1) is formed between the resin member (40) and the body of the stator iron core (11). The unfilled region (S3) is present between the elastic deformation portions (18) that form a pair.

In the example in Fig. 9C, the resin that forms the resin member (40) is present also on the body facing surface (F). In the example in Fig. 9C, the resin member (40) fixed to one of the elastic deformation portions (18) that form a pair is a separate body from the resin member (40) fixed to the other one of the elastic deformation portions (18). The unfilled region (S3) is formed between these resin members (40) that are separate bodies. The unfilled region (S3) is present also between the elastic deformation portions (18) that form a pair.

In the example in Fig. 9D, a resin that forms the resin member (40) is not present on the body facing surface (F). In the example in Fig. 9D, the resin member (40) fixed to one of the elastic deformation portions (18) that form a pair is a separate body from the resin member (40) fixed to the other one of the elastic deformation portions (18). The unfilled region (S3) is formed between these resin members (40) that are separate bodies. The unfilled region (S3) is present also between the elastic deformation portions (18) that form a pair.

Even when the elastic deformation portions (18) according to the present embodiment are used, the body of the stator iron core (11) and the resin member (40) may be in contact with each other. In other words, even when the elastic deformation portions (18) according to the present embodiment are used, the stator (10) may be not necessarily provided with the gap (S1).

### [Embodiment 6]

Also in the present embodiment, different examples of the elastic deformation portion (18) and the resin member (40) will be described.

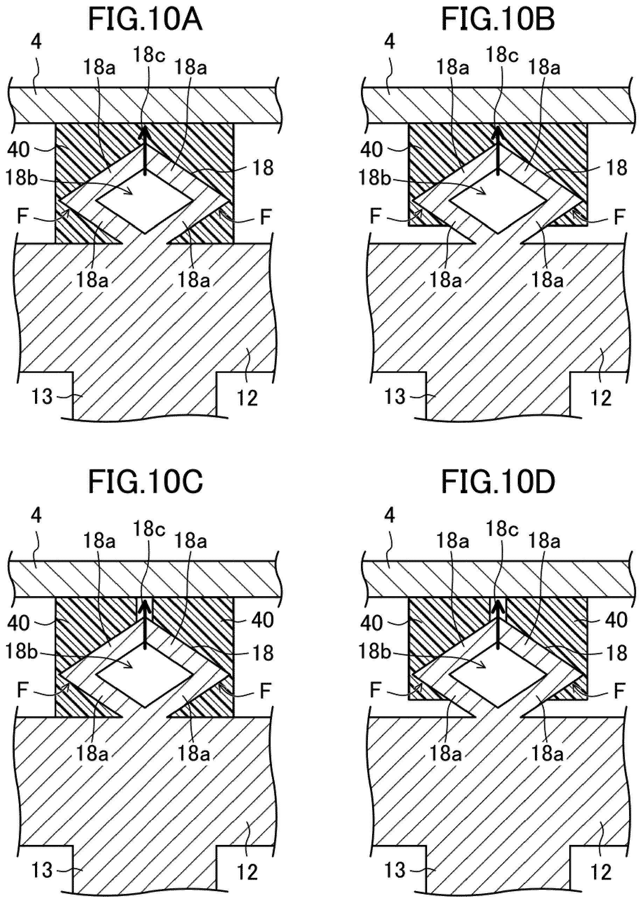

The shape of the elastic deformation portion (18) is the same in any of the examples in Fig. 10A to Fig. 10D. In the examples in Fig. 10A to Fig. 10D, the shape of the elastic deformation portion (18) viewed in the axial direction is a hollow rhombus (alternatively called a pantograph shape). In detail, the elastic deformation portion (18) includes plate-shaped portions (18a) provided at the four sides thereof. The plate-shaped portions (18a) are elastically deformable by a load in the radial direction. In this example, one elastic deformation portion (18) is provided in correspondence to one teeth portion (13) .

The shape of the resin member (40) is different among the examples in Fig. 10A to Fig. 10D. In any of Fig. 10A to Fig. 10D, a resin that constitutes the resin member (40) is not present at a hollow part (18b) of the elastic deformation portion (18). Also in these examples, due to the elastic deformation portion (18) being preloaded, the elastic deformation portion (18) exerts elastic force (refer to the arrows in Fig. 8A to Fig. 8C) toward the outer periphery.

In the example in Fig. 10A, the resin member (40) covers the outer periphery of the elastic deformation portion (18). In the example in Fig. 10A, the body of the stator iron core (11) and the resin member (40) are in contact with each other. In other words, the gap (S1) is not present in the example in Fig. 10A.

In the example in Fig. 10B, a resin that constitutes the resin member (40) is extended to be present on only part of the body facing surface (F). In the example in Fig. 10B, the gap (S1) is present between the body of the stator iron core (11) and the resin member (40). In this point, the example in Fig. 10B differs from the example in Fig. 10A.

In the example in Fig. 10C, the unfilled region (S3), in which the resin member (40) is not present, is present at a corner portion (18c) of the elastic deformation portion (18) on the side of the casing (4). In other words, a part of the elastic deformation portion (18) is exposed on the side of the casing (4) (the side of the supporting member) from the resin member (40). In this point, the example in Fig. 10C differs from the example in Fig. 10A.

In the example in Fig. 10D, the gap (S1) is present between the body of the stator iron core (11) and the resin member (40), as in the example in Fig. 10B. In the example in Fig. 10D, the unfilled region (S3), in which the resin member (40) is not present, is present at the corner portion (18c), as in Fig. 10C.

### [Modification 1 of Embodiment 6]

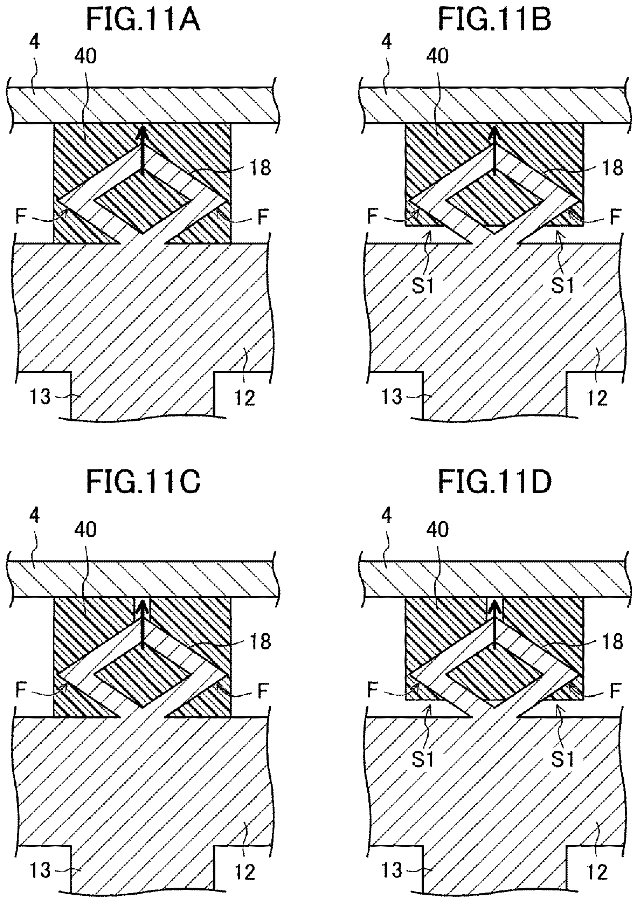

In Fig. 11A to Fig. 11D, Modification 1 of Embodiment 6 is illustrated. In the examples in Fig. 11A to Fig. 11D, the resin that constitutes the resin member (40) is also placed in the hollow part (18b) of the elastic deformation portion (18). Also in these examples, due to the elastic deformation portion (18) being preloaded, the elastic deformation portion (18) exerts elastic force (refer to the arrows in Fig. 8A to Fig. 8C) toward the outer periphery.

The example in Fig. 11A is a modification of the example in Fig. 10A. The example in Fig. 11A differs from the example in Fig. 10A in that the entirety of the hollow part (18b) is filled with a resin material that constitutes the resin member (40).

The example in Fig. 11B is a modification of the example in Fig. 10B. The example in Fig. 11B differs from the example in Fig. 10B in that the hollow part (18b) is filled with only a predetermined amount of a resin material that constitutes the resin member (40).

In the example in Fig. 11B, a region that is not filled with a resin material is present in a portion of the hollow part (18b). In the example in Fig. 11B, the two plate-shaped portions (18a) on the side of the casing (4) are covered with the resin member (40). The two plate-shaped portions (18a) on the side of the stator iron core (11) are partially covered with the resin member (40). In the example in Fig. 11B, the gap (S1) is formed between the resin member (40) and the body of the stator iron core (11).

The example in Fig. 11C is a modification of the example in Fig. 10C. The example in Fig. 11C differs from the example in Fig. 10C in that the entirety of the hollow part (18b) is filled with a resin material that constitutes the resin member (40).

The example in Fig. 11D is a modification of the example in Fig. 10D. The example in Fig. 11D differs from the example in Fig. 10D in that the hollow part (18b) is filled with only a predetermined amount of a resin material that constitutes the resin member (40).

In the example in Fig. 11D, a part that is not filled with a resin material is present in a portion of the hollow part (18b). In the example in Fig. 11D, the two plate-shaped portions (18a) on the side of the casing (4) are covered with the resin member (40). The two plate-shaped portions (18a) on the side of the stator iron core (11) are partially covered with the resin member (40). In the example in Fig. 11D, the gap (S1) is formed between the resin member (40) and the body of the stator iron core (11).

### [Modification 2 of Embodiment 6]

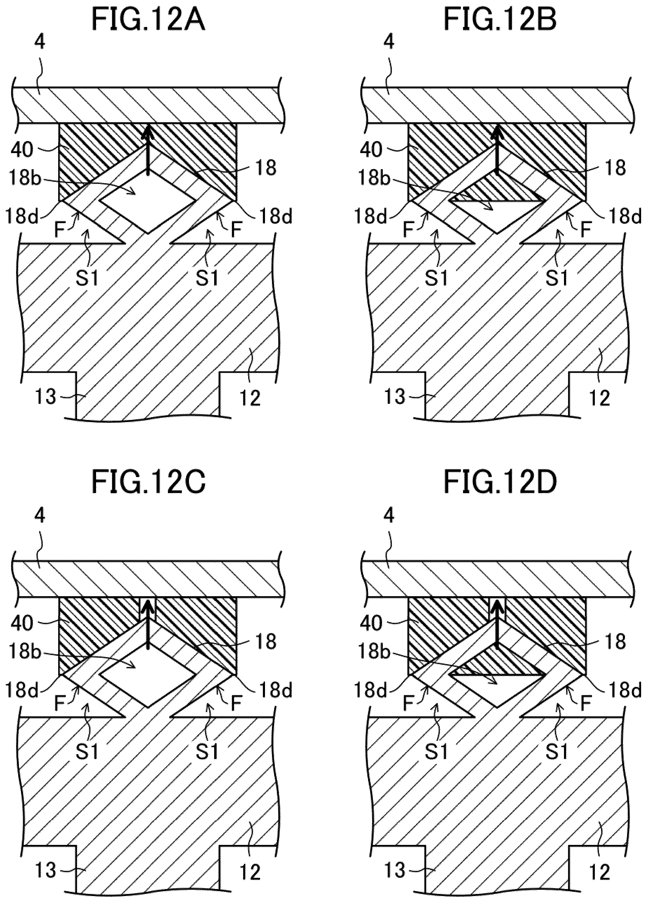

In Fig. 12A to Fig. 12D, the elastic deformation portion (18) and the resin member (40) according to Modification 2 of Embodiment 6 are illustrated. Also in these examples, due to the elastic deformation portion (18) being preloaded, the elastic deformation portion (18) exerts elastic force (refer to the arrows in Fig. 8A to Fig. 8C) toward the outer periphery.

The example in Fig. 12A is a modification of the example in Fig. 10B. Here, corner portions formed by the plate-shaped portions (18a) that are on the side of the casing (4) and the plate-shaped portions (18a) that are on the side of the stator iron core (11) and that are continuous with the plate-shaped portions (18a) on the side of the casing (4) are referred to as corner portions (18d). In the example in Fig. 12A, a resin that forms the resin member (40) is not present on a part closer than the corner portions (18d) to the stator iron core (11) in the outer peripheral surface of the elastic deformation portion (18). In this point, the example in Fig. 12A differs from the example in Fig. 10B.

The example in Fig. 12B is a modification of the example in Fig. 11B. In the example in Fig. 12B, the hollow part (18b) is filled with a less amount of a resin material than that in the example in Fig. 11B. In the elastic deformation portion (18) in the example in Fig. 12B, a resin that forms the resin member (40) is not present at part of both the outer peripheral surface and the hollow part (18b) closer than the corner portions (18d) to the stator iron core (11).

The example in Fig. 12C is a modification of the example in Fig. 10D. In the example in Fig. 12C, a resin that forms the resin member (40) is not present at a part of the elastic deformation portion (18) closer than the corner portions (18d) to the stator iron core (11). In this point, the example in Fig. 12C differs from the example in Fig. 10D.

The example in Fig. 12D is a modification of the example in Fig. 11D. In the example in Fig. 12D, a resin that forms the resin member (40) is not present at part of both the outer peripheral surface and the hollow part (18b) closer than the corner portions (18d) to the stator iron core (11) in the elastic deformation portion (18). In this point, the example in Fig. 12D differs from the example in Fig. 11D.

### [Other Embodiments]

The structure of fixation between the iron cores (10, 20) and the supporting members (2a, 4) described in the embodiments and the modifications may be applied to the fixation between the rotor iron core (31) and the shaft (2a). When the rotor iron core (31) and the shaft (2a) are fixed to each other, the supporting member is the shaft (2a). For example, it may be considered to provide the elastic deformation portion (18) in the through hole (33) of the rotor iron core (31) and mold the resin member (40) integrally with the elastic deformation portion (18).

When the stator iron core (11) and the casing (4) are electrically insulated from each other, leakage current tends to flow from the rotor (20) to the shaft (2a). In such a case, it is significant to provide the resin member (40) between the rotor iron core (31) and the shaft (2a) and electrically insulate the two members from each other.

The elastic deformation portion (18) may be provided on the supporting members (2a, 4). Even in such a case, the supporting members (2a, 4) may be the shaft (2a) and may be the casing (4). In other words, the elastic deformation portion (18) may be provided on the casing (4) and may be provided on the shaft (2a).

The elastic deformation portion (18) may be provided on both the supporting members (2a, 4) and the iron cores (10, 20) .

The number of the elastic deformation portions (18) and the shape thereof are presented as examples.

The iron cores (10, 20) are not limited to laminated cores. The iron cores (10, 20) may be formed of, for example, pressed powder. When iron cores of pressed powder are used, it is preferable that the elastic deformation portion (18) be formed on the supporting members (2a, 4).

When the iron cores (10, 20) are formed as laminated cores of electromagnetic steel sheets and when the elastic deformation portion (18) is provided on the iron cores, the elastic deformation portion (18) may be formed on all of the laminated electromagnetic steel sheets and may be formed on only some of the electromagnetic steel sheets.

The number of magnetic poles of the stator (10) and the rotor (20) described in the embodiments and the modifications is presented as an example.

The structure of fixation between the iron cores and the supporting members described in the embodiments and the modifications may be applied to a power generator.

Although embodiments and modifications have been described above, it should be understood that various changes in the forms and the details are possible without departing from the gist and the scope of the claims. The embodiments and the modifications above may be combined and replaced, as appropriate, as long as object functions of the present disclosure are not lost.

### Industrial Applicability

As described above, the present disclosure is useful for a rotating electric machine, a compressor, and a method of manufacturing a rotating electric machine.

### Reference Signs List

- 1: compressor
- 2: motor (rotating electric machine)
- 2a: shaft
- 3: compression mechanism
- 4: casing
- 10: stator
- 11: stator iron core
- 18: elastic deformation portion
- 20: rotor
- 31: rotor iron core
- 40: resin member
- S1: gap
- S2: gap

## Claims

1. A rotating electric machine comprising:
a plurality of iron cores (10, 20); and
a plurality of supporting members (2a, 4),
wherein at least one of the iron cores (10, 20) is supported by any one of the supporting members (2a, 4) via a resin member (40), and
at least either of the iron core (10, 20) and the supporting member (2a, 4) that are mutually supported via the resin member (40) is provided with an elastic deformation portion (18) configured to press the resin member (40) against the other one of the iron core (10, 20) and the supporting member (2a, 4).

2. The rotating electric machine according to claim 1,
wherein a gap (S1) is formed between a body of a member provided with the elastic deformation portion (18) and the resin member (40).

3. The rotating electric machine according to claim 1 or claim 2,
wherein a plurality of the elastic deformation portions (18) are provided at predetermined intervals, and
a gap (S2) is formed between the elastic deformation portions (18) adjacent to each other.

4. The rotating electric machine according to any one of claims 1 to 3,
wherein the iron core (10, 20) supported by the supporting member (2a, 4) via the resin member (40) is a stator (10), and
the supporting member (2a, 4) that supports the stator (10) is a casing (4).

5. The rotating electric machine according to any one of claims 1 to 4,
wherein the iron core (10, 20) supported by the supporting member (2a, 4) via the resin member (40) is a rotor (20), and
the supporting member (2a, 4) that supports the rotor (20) is a shaft (2a).

6. A compressor comprising:
the rotating electric machine (2) according to any one of claims 1 to 5; and
a compression mechanism (3) configured to be driven by the rotating electric machine.

7. A method of manufacturing a rotating electric machine,
the rotating electric machine including an iron core (10, 20), a supporting member (2a, 4) that supports the iron core (10, 20) via a resin member (40), and an elastic deformation portion (18) that is provided on at least either of the iron core (10, 20) and the supporting member (2a, 4) and that is configured to press the resin member (40) against the other one of the iron core (10, 20) and the supporting member (2a, 4) by elastic force,
the method comprising:
a step of forming the resin member (40) on the elastic deformation portion (18) by injection molding; and
a step of fixing the iron core (10, 20) and the supporting member (2a, 4) to each other while elastically deforming the elastic deformation portion (18).
